# EUROPEAN PATENT APPLICATION

(11) **EP 4 557 817 A1**
(43) Date of publication of application: **21.05.2025**
(21) Application number: 22950665.4
(22) Date of filing: 14.07.2022
(51) Int. Cl.: H04W 28/00

(54) **MEASUREMENT METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); WU, Yumin, Beijing 100085 (CN)
(74) Representative: Stöckeler, Ferdinand
(86) International application number: PCT/CN2022/105831
(87) International publication number: WO 2024/011544

(57) **Abstract**

Disclosed in embodiments of the present invention are a measurement method and apparatus, a device, and a storage medium, capable of being applied to a communication system. When executed by a terminal device, the method comprises: receiving a first message sent by a network device, wherein the first message comprises application layer measurement related information, and the application layer measurement related information is used for activating or deactivating application layer measurement. By implementing the method of the present invention, no limitation is caused by the state of a terminal device, the range of the terminal device covered by application layer measurement can be effectively expanded, the measurement comprehensiveness is improved, and the measurement effect is improved.

## Description

### TECHNICAL FIELD

The present disclosure relates to the field of communication technology, and specifically to a measurement method, a measurement apparatus, a device, and a storage medium.

### BACKGROUND

Application layer measurement includes, for example, quality of experience (QoE) measurement collection (QMC), and an application layer measurement result, for example, QMC result. QoE refers to the service quality experience of users. In the 3rd generation partnership project (3GPP) network, QoE may be reflected by some application layer parameters, and QMC refers to that an operator collects QoE parameters of a specific service (for example, a video, an audio, etc.) from an application layer of a terminal based on network configuration, and the operator may obtain the service experience of users in the network through the QMC, determine users and issues with poor experience, analyze and optimize user experience.

In the related art, the application layer measurement is only performed when the terminal is in an RRC_CONNECTED state (that is, radio resource control (RRC) connected state), and the application layer measurement is configured at the granularity of terminal.

In this way, the application layer measurement of the terminal may be limited by the state of the terminal, which causes that terminals involved in the application layer measurement are not comprehensive enough, thereby affecting the comprehensiveness of the measurement, and affecting the measurement effect.

### SUMMARY

The embodiments of the present disclosure provide a measurement method, a measurement apparatus, a device, a chip system, a storage medium, a computer program and a computer program product, applied in the field of communication technology, which may effectively expand a scope of terminals covered by an application layer measurement, enhance the comprehensiveness of the measurement, and improve the measurement effect.

According to a first aspect of the embodiments of the present disclosure, a measurement method is provided, performed by a terminal, including: receiving a first message sent by a network device, in which the first message includes information related to an application layer measurement, and the information related to the application layer measurement is configured to activate or deactivate the application layer measurement.

In one implementation, the first message includes at least one of: system information; a paging message; medium access control control element (MAC CE) information; or a radio resource control (RRC) release message.

In one implementation, the information related to the application layer measurement includes at least one of: an application layer measurement configuration parameter set; or activation or deactivation command information.

In one implementation, the application layer measurement configuration parameter set includes: at least one application layer configuration parameter, and the application layer configuration parameter includes at least one of: an identity (ID) of an application layer measurement task; application layer measurement content; a type of service; an area scope; a measurement duration; a reporting configuration; or a statistical request, in which the statistical request is configured to indicate the terminal to report to the network device whether the application layer measurement is activated.

In one implementation, the activation or deactivation command information includes at least one of: an ID of an application layer measurement task; activation or deactivation indication information; or a statistical request, in which the statistical request is configured to indicate the terminal to report to the network device whether the application layer measurement is activated.

In one implementation, receiving the first message sent by the network device, in which the first message includes the information related to the application layer measurement, includes: receiving system information or a paging message sent by the network device, in which the system information or the paging message includes an application layer measurement configuration parameter set.

In one implementation, the system information or the paging message further includes activation command information.

In one implementation, receiving the first message sent by the network device, in which the first message includes the information related to the application layer measurement, includes: receiving an RRC release message sent by the network device, in which the RRC release message includes an application layer measurement configuration parameter set; and receiving system information or a paging message or MAC CE information sent by the network device, in which the system information or the paging message or the MAC CE information includes activation command information.

In one implementation, the information related to the application layer measurement includes an application layer measurement configuration parameter set, and the method further includes at least one of: transmitting application layer measurement content in the application layer measurement configuration parameter set from an access stratum (AS) to an upper layer in a case that the application layer measurement configuration parameter set includes a type of service, and the terminal checks that the type of service is supported; or discarding the application layer measurement configuration parameter set in a case that the application layer measurement configuration parameter set includes a type of service, and the terminal checks that the type of service is not supported.

In one implementation, the information related to the application layer measurement includes an application layer measurement configuration parameter set, and the method further includes at least one of: notifying an application layer to perform a measurement in a case that the application layer measurement configuration parameter set includes an area scope, and a cell where the terminal is located is within the area scope; or notifying an application layer to stop performing a measurement in a case that the application layer measurement configuration parameter set includes an area scope, and a cell where the terminal is located is not within the area scope.

In one implementation, the method further includes: determining a first time period lapsed after transmitting the application layer measurement content in a case that the application layer measurement configuration parameter set includes a first measurement duration; and stopping the application layer measurement and/or releasing the application layer measurement configuration parameter set in a case that the first time period reaches the first measurement duration.

In one implementation, the method further includes: determining a second time period lapsed after performing the application layer measurement in a case that the application layer measurement configuration parameter set includes a second measurement duration; and stopping the application layer measurement and/or releasing the application layer measurement configuration parameter set in a case that the second time period reaches the second measurement duration.

In one implementation, the method further includes: sending an uplink control signaling to the network device in a case that the application layer measurement configuration parameter set includes a statistical request or there is a protocol agreement between the terminal and the network device; in which the uplink control signaling is configured to indicate that the application layer measurement is activated, and the uplink control signaling includes information indicating an ID of an application layer measurement task.

In one implementation, sending the uplink control signaling to the network device includes: determining a sending time based on a randomization mode; and sending the uplink control signaling to the network device in a case that a current time reaches the sending time.

In one implementation, receiving the first message sent by the network device, in which the first message includes the information related to the application layer measurement, includes: receiving system information or a paging message or MAC CE information sent by the network device, in which the system information or the paging message or the MAC CE information includes information for deactivating the application layer measurement.

In one implementation, the information for deactivating the application layer measurement includes at least one of: application layer deactivation indication information; or an ID of an application layer measurement task.

In one implementation, the method further includes: stopping an application layer measurement corresponding to the ID of the application layer measurement task in a case that the application layer deactivation indication information is received; and releasing an application layer measurement configuration parameter set.

In one implementation, a state of the terminal is one of: an RRC connected state; an RRC idle state; or an RRC inactive state.

According to a second aspect of the embodiments of the present disclosure, a measurement method is provided, performed by a network device, including: sending a first message to a terminal, in which the first message includes information related to an application layer measurement, and the information related to the application layer measurement is configured to activate or deactivate the application layer measurement in the terminal.

In one implementation, the first message includes at least one of: system information; a paging message; MAC CE information; or an RRC release message.

In one implementation, the information related to the application layer measurement includes at least one of: an application layer measurement configuration parameter set; or activation or deactivation command information.

In one implementation, the application layer measurement configuration parameter set includes: at least one application layer configuration parameter, and the application layer configuration parameter includes at least one of: an ID of an application layer measurement task; application layer measurement content; a type of service; an area scope; a measurement duration; a reporting configuration; or a statistical request, in which the statistical request is configured to indicate the terminal to report to the network device whether the application layer measurement is activated.

In one implementation, the activation or deactivation command information includes at least one of: an ID of an application layer measurement task; activation or deactivation indication information; or a statistical request, in which the statistical request is configured to indicate the terminal to report to the network device whether the application layer measurement is activated.

In one implementation, sending the first message to the terminal, in which the first message includes the information related to the application layer measurement, includes: sending system information or a paging message to the terminal, in which the system information or the paging message includes an application layer measurement configuration parameter set.

In one implementation, the system information or the paging message further includes activation command information.

In one implementation, sending the first message to the terminal, in which the first message includes the information related to the application layer measurement, includes: sending an RRC release message to the terminal, in which the RRC release message includes an application layer measurement configuration parameter set; and sending system information or a paging message or MAC CE information to the terminal, in which the system information or the paging message or the MAC CE information includes activation command information.

In one implementation, the method further includes: receiving an uplink control signaling sent by the terminal, in which the uplink control signaling is configured to indicate that the application layer measurement is activated, and the uplink control signaling includes information indicating an ID of an application layer measurement task.

In one implementation, sending the first message to the terminal, in which the first message includes the information related to the application layer measurement, includes: sending system information or a paging message or MAC CE information to the terminal, in which the system information or the paging message or the MAC CE information includes information for deactivating the application layer measurement.

In one implementation, the information for deactivating the application layer measurement includes at least one of: application layer deactivation indication information; or an ID of an application layer measurement task.

In one implementation, the paging message is configured for each terminal; or the paging message is configured for a paging group, in which the paging group includes a plurality of terminals to be paged, and the terminal is one of the terminals to be paged.

In one implementation, the paging message includes at least one of: a paging early indication (PEI); paging downlink control information (DCI); or a paging short message.

In one implementation, a state of the terminal is one of: an RRC connected state; an RRC idle state; or an RRC inactive state.

According to a third aspect of the embodiments of the present disclosure, a communication apparatus is provided. The communication apparatus has some or all of the functions of the terminal in the method in the first aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In one implementation, the communication apparatus may include a transceiver module and a processing module, in which the processing module is configured to support the communication apparatus to perform the corresponding functions in the above method, the transceiver module is configured to support a communication between the communication apparatus and other devices. The communication apparatus may also include a storage module, in which the storage module is configured to couple with the transceiver module and the processing module, and save a computer program and data necessary for the communication apparatus.

As an example, the processing module may be a processor, the transceiver module may be a transceiver or a communication interface, and the storage module be a memory.

According to a fourth aspect of the embodiments of the present disclosure, a communication apparatus is provided. The communication apparatus has some or all of the functions of the network device in the method in the second aspect above, for example, the communication apparatus may have the functions in some or all of the embodiments of the present disclosure or may have the functions for independently implementing any one of the embodiments of the present disclosure. The functions may be realized by a hardware or by software which is executed by hardware. The hardware or software includes one or more units or modules corresponding to the above functions.

Optionally, in an embodiment of the present disclosure, the structure of the communication apparatus may include a transceiver module and a processing module, in which the processing module is configured to support the communication apparatus to perform corresponding functions in the above method, and the transceiver module is configured to support a communication between the communication apparatus and other devices. The communication apparatus may also include a storage module, in which the storage module is configured to couple with the transceiver module and the processing module, and save a computer program and data necessary for the communication apparatus.

According to a fifth aspect of the embodiments of the present disclosure, a communication apparatus including a processor is provided. When a computer program in a memory is called by the processor, the measurement method in the first aspect is implemented.

According to a sixth aspect of the embodiments of the present disclosure, a communication apparatus including a processor is provided. When a computer program in a memory is called by the processor, the measurement method in the second aspect is implemented.

According to a seventh aspect of the embodiments of the present disclosure, a communication apparatus is provided, including a processor and a memory for storing a computer program. When the computer program stored in the memory is executed by the processor, the communication apparatus is caused to implement the measurement method in the first aspect.

According to an eighth aspect of the embodiments of the present disclosure, a communication apparatus is provided, including a processor and a memory for storing a computer program. When the computer program stored in the memory is executed by the processor, the communication apparatus is caused to implement the measurement method in the second aspect.

According to a ninth aspect of the embodiments of the present disclosure, a communication apparatus is provided, including a processor and an interface circuit for receiving code instructions and sending the code instructions to the processor, in which the processor is configured to run the code instructions to cause the apparatus to perform the measurement method in the first aspect.

According to a tenth aspect of the embodiments of the present disclosure, a communication apparatus is provided, including a processor and an interface circuit for receiving code instructions and sending the code instructions to the processor, in which the processor is configured to run the code instructions to cause the apparatus to perform the measurement method in the second aspect.

According to an eleventh aspect of the embodiments of the present disclosure, a communication system is provided, in which the system includes the communication apparatus in the third aspect and the communication apparatus in the fourth aspect, or the communication apparatus in the fifth aspect and the communication apparatus in the sixth aspect, or the communication apparatus in the seventh aspect and the communication apparatus in the eighth aspect, or the communication apparatus in the ninth aspect and the communication apparatus in the tenth aspect.

According to a twelfth aspect of the embodiments of the present disclosure, a computer-readable storage medium for storing instructions used by the terminal is provided. When the instructions are executed, the terminal is caused to implement the measurement method in the first aspect.

According to a thirteenth aspect of the embodiments of the present disclosure, a computer-readable storage medium for storing instructions used by the network device is provided. When the instructions are executed, the network device is caused to implement the measurement method in the second aspect.

According to a fourteenth aspect of the embodiments of the present disclosure, a computer program product including a computer program is provided. When the computer program is running on a computer, the computer is caused to perform the measurement method in the first aspect.

According to a fifteenth aspect of the embodiments of the present disclosure, a computer program product including a computer program is provided. When the computer program is running on a computer, the computer is caused to perform the measurement method in the second aspect.

According to a sixteenth aspect of the embodiments of the present disclosure, a chip system is provided, including at least one processor and an interface configured to support the terminal to perform the functions in the first aspect, for example, at least one of determining or processing data and information in the above method.

In one possible design, the chip system also includes a memory for saving a computer program and data necessary for the terminal. The chip system may include a chip, or a chip and other discrete devices.

According to a seventeenth aspect of the embodiments of the present disclosure, a chip system is provided, including at least one processor and an interface configured to support the network device to perform the functions in the second aspect, for example, at least one of determining or processing data and information in the above method.

In one possible design, the chip system also includes a memory for saving a computer program and data necessary for the network device. The chip system may include a chip, or a chip and other discrete devices.

According to an eighteenth aspect of the embodiments of the present disclosure, a computer program is provided. When the computer program is running on a computer, the computer is caused to implement the measurement method in the first aspect.

According to a nineteenth aspect of the embodiments of the present disclosure, a computer program is provided. When the computer program is running on a computer, the computer is caused to implement the measurement method in the second aspect.

In summary, the measurement method, the measurement apparatus, the chip system, the storage medium, the computer program and the computer program product in the embodiments of the present disclosure may achieve the following technical effects.

The first message sent by the network device is received, in which the first message includes the information related to the application layer measurement, and the information related to the application layer measurement is configured to activate or deactivate the application layer measurement, so that the applicant layer measurement may not be limited by the state of the terminal, which may effectively expand the scope of terminals covered by the application layer measurement, improve the comprehensiveness of the measurement, and improve the measurement effect.

### BRIEF DESCRIPTION OF THE DRAWINGS

In order to clearly illustrate technical solutions of the embodiments and the background of the present disclosure, a brief description of drawings used in embodiments and the background is given below.
FIG. 1 is a schematic diagram of a communication system according to an embodiment of the present disclosure.
FIG. 2 is a flowchart of a measurement method according to an embodiment of the present disclosure.
FIG. 3 is a flowchart of a measurement method according to an embodiment of the present disclosure.
FIG. 4 is a flowchart of a measurement method according to an embodiment of the present disclosure.
FIG. 5 is another flowchart of a measurement method according to an embodiment of the present disclosure.
FIG. 6 is another flowchart of a measurement method according to an embodiment of the present disclosure.
FIG. 7 is another flowchart of a measurement method according to an embodiment of the present disclosure.
FIG. 8 is another flowchart of a measurement method according to an embodiment of the present disclosure.
FIG. 9 is another flowchart of a measurement method according to an embodiment of the present disclosure.
FIG. 10 is another flowchart of a measurement method according to an embodiment of the present disclosure.
FIG. 11 is another flowchart of a measurement method according to an embodiment of the present disclosure.
FIG. 12 is another flowchart of a measurement method according to an embodiment of the present disclosure.
FIG. 13 is a block diagram of a communication apparatus according to an embodiment of the present disclosure.
FIG. 14 is another block diagram of a communication apparatus according to an embodiment of the present disclosure.
FIG. 15 is a block diagram of a chip according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first message may also be referred to as the second information, and likewise the second information may be referred to as the first message. Depending on the context, the words "if" and "in a case" used here may be interpreted as "when" or "in response to determining".

In order to better understand the measurement method in the embodiments of the present disclosure, a communication system to which the embodiments of the present disclosure is applicable is firstly described as follows.

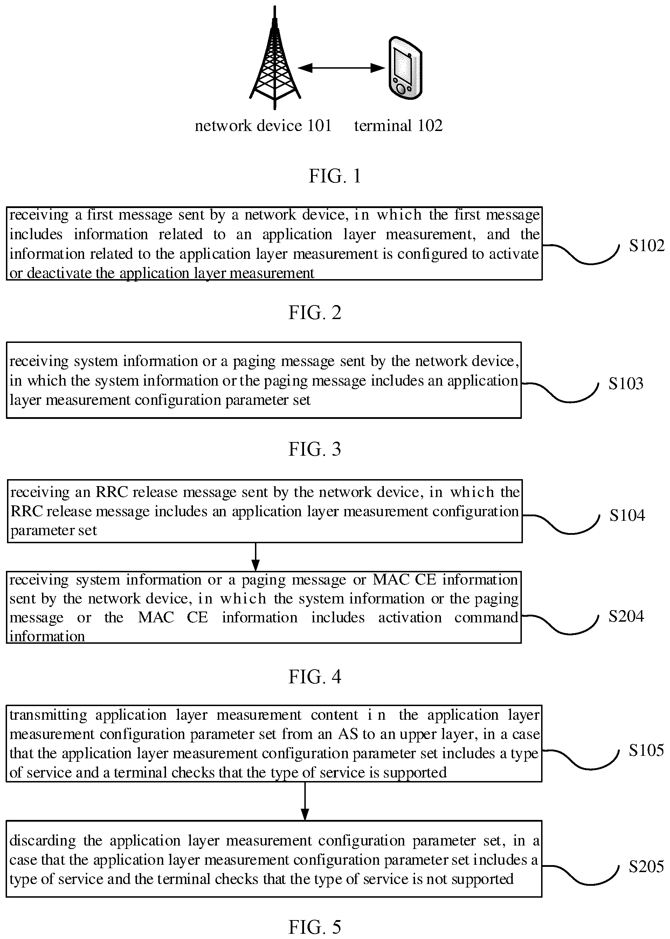

Please refer to FIG. 1, which is a schematic diagram of a communication system according to an embodiment of the present disclosure. The communication system may include, but is not limited to, one network device and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including one network device 101 and one terminal 102 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access node in a wireless fidelity (WiFi) system. The embodiments of the present disclosure do not limit the specific technology and the specific device form used by the network device.

The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present disclosure is an entity on the user side for receiving or sending signals, such as a mobile phone. Terminal may also be called a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in autonomous driving, a wireless terminal in remote medical surgery, a wireless terminal in smart grid, a wireless terminal in transportation safety, a wireless terminal in smart city, a wireless terminal in smart home, etc.

The embodiments of the present disclosure do not limit the specific technology and the specific device form used by the terminal.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

The measurement method and apparatus in the disclosure are introduced below in detail in combination with accompanying drawings.

In the embodiments of the present disclosure, an application layer measurement being a quality of experience (QoE) measurement is shown as an example, of course, it may also be any other possible type of measurement supported by an application layer, which is not limited herein.

FIG. 2 is a flowchart of a measurement method according to an embodiment of the present disclosure. The method is executed by a terminal.

The measurement method in the present embodiment may be applied to the terminal. The terminal receives a message sent by a network device. The network device may be an eNB, a TRP, a gNB in an NR system, a base station in other mobile communication system in the future, or an access point in a WiFi system, which is not limited herein.

As shown in FIG. 2, the method may include, but is not limited to, the following step.

At S102, a first message sent by a network device is received, in which the first message includes information related to an application layer measurement, and the information related to the application layer measurement is configured to activate or deactivate the application layer measurement.

The message sent by the network device to trigger the terminal to perform an application layer measurement may be called the first message.

In some embodiments, when the network device has a measurement requirement, the information related to the application layer measurement may be included in the first message, and the first message may be sent to the terminal. The terminal receives the first message sent by the network device and obtains the information related to the application layer measurement from the first message. The application layer measurement is activated or deactivated based on the information related to the application layer measurement.

For example, the application layer measurement may be activated or deactivated based on the information related to the application layer measurement, which is not limited herein.

In the measurement method according to the embodiments of the present disclosure, a state of the terminal is one of: an RRC connected state; an RRC idle state; or an RRC inactive state.

That is, the terminal in the embodiments of the present disclosure may be in any state, such as in an RRC_CONNECTED state (i.e. a radio resource control (RRC) connected state), in an RRC_IDLE state (i.e. an RRC idle state) or in an RRC_INACTIVE state (i.e. an RRC inactive state).

That is, the embodiments in the present disclosure may support the terminal in any state to perform the application layer measurement, especially in the RRC_CONNECTED state or the RRC_IDLE state. Therefore, the application layer measurement is not limited by the state of the terminal, so that the scope of terminals covered by the application layer measurement may be effectively expanded, thereby improving the comprehensiveness of the measurement and improving the measurement effect.

**In** the embodiments of the present disclosure, a measurement method is provided. After a UE receives a QoE configuration, an access stratum (AS) of the UE performs a verification on a QoE measurement capability and/or an area verification. The UE sends information for activating the QoE to a base station via an uplink control signaling. The UE sending the information for activating the QoE to the base station via the uplink control signaling is realized by a randomization mechanism. For details, please refer to subsequent embodiments.

In this embodiment, the first message sent by the network device is received, in which the first message includes the information related to the application layer measurement, and the information related to the application layer measurement is configured to activate or deactivate the application layer measurement, so that the application layer measurement may not be limited by the state of the terminal, which may effectively expand the scope of terminals covered by the application layer measurement, improve the comprehensiveness of the measurement, and improve the measurement effect.

In the embodiments of the present disclosure, a measurement method is provided. The first message includes at least one of: system information; a paging message; medium access control control element (MAC CE) information; or an RRC release message. The measurement method may effectively improve a flexibility of configuring the first message, facilitate improving the measurement indication effect, and reduce the signaling overhead of a measurement indication.

In the embodiments of the present disclosure, a measurement method is provided. The information related to the application layer measurement includes at least one of: an application layer measurement configuration parameter set; or activation or deactivation command information. The measurement method may ensure the accuracy of the measurement indication and improve the measurement effect.

The information related to the application layer measurement may be, for example, information related to activation or deactivation of the QoE measurement. The information related to the activation or deactivation of the QoE measurement may include at least one of: a QoE measurement configuration parameter set; or activation or deactivation command.

For example, the application layer measurement configuration parameter set may be the QoE measurement configuration parameter set. The activation or deactivation command information may be used to describe an activation or deactivation command, which is not limited herein.

In the embodiments of the present disclosure, a measurement method is provided. The application layer measurement configuration parameter set includes: at least one application layer configuration parameter, and the application layer configuration parameter includes at least one of: an identity (ID) of an application layer measurement task; application layer measurement content; a type of service; an area scope; a measurement duration; a reporting configuration; or a statistical request, in which the statistical request is configured to indicate the terminal to report to the network device whether the application layer measurement is activated. The measurement method may effectively improve the comprehensiveness of the measurement indication, so that the terminal may obtain comprehensive information needed in the measurement, which may ensure the measurement effect.

The QoE measurement configuration parameter set includes one or more QoE configurations (The QoE configuration is an example of the application layer configuration.). Each QoE configuration includes at least one of: an ID of a QoE measurement task; QoE measurement content; a type of service; a measurement duration; a reporting configuration; or a statistical request.

For example, the ID of the application layer measurement task may be an ID of the QoE measurement task, and the application layer measurement content may be the QoE measurement content.

There are two kinds of application layer measurements. One is invisible to a radio access network (RAN) and may be realized via an application layer measurement container. The other is visible to an RAN, expressed as an RAN visible application layer measurement (RAN visible QoE). The application layer measurement content may be the application layer measurement container, and/or RAN visible measurement content, which is not limited herein.

The ID of the QoE measurement task is configured to indicate an identification of a QoE measurement task, for example, the QoE mark reference or an RRC ID generated by the base station. The UE will store the ID of the QoE measurement task to report the QoE, and to activate or deactivate the QoE. For QoE metrics of specific services, the QoE measurement content is configured to indicate a UE application layer to collect corresponding QoE metrics. The type of service, for example, a multicast/broadcast service (MBS), is used for an AS of the UE to verify whether the UE supports a QoE measurement in the type of service. If the UE supports, the AS of the UE will send the QoE measurement to the upper layer.

The area scope, for example, may be a tracking area (TA) list, an RAN notification area or a cell list, which is used for the AS of the UE to verify whether it is within the area scope. If it is in scope (i.e., within the area scope), the AS of the UE will send the QoE measurement content to the UE application layer; if it is out of scope (i.e., not within the area scope), the AS of the UE will notify the UE application layer to stop the QoE measurement or discard the QoE measurement configuration.

The measurement duration is configured to indicate a duration of a QoE measurement collection (QMC) by the UE. The reporting configuration is configured to indicate a requirement for the UE to report a QoE report to the network device. For example, the reporting configuration may be a reporting occasion, which may be immediate or delay tolerable. Immediate means to report immediately after the measurement is complete. Delay tolerable means that there is no need to report immediately after the measurement is complete, but to report when the UE is switched back to the RRC_CONNECTED state.

The statistical request is configured to indicate the UE to report to the base station whether the QoE measurement is activated, for example, the statistical request may be 1-bit information, for example, 1 means that the UE needs to report, and 0 means that the UE needs not to report, or the statistical request may be a specific random access channel (RACH) configuration, or an uplink (UL) configuration, or an UL control signaling configuration, or the statistical request may indicate to report activation information via an RRC signaling (for example, it may be transmitted via a small data transmission (SDT) mechanism), or the statistical request may indicate that UE may indicate to the base station that the QoE measurement is activated via the above configuration in a specific way.

In the embodiments of the present disclosure, a measurement method is provided. The activation or deactivation command information includes at least one of: an ID of an application layer measurement task; activation or deactivation indication information; or a statistical request, in which the statistical request is configured to indicate the terminal to report to the network device whether the application layer measurement is activated.

The ID of the application layer measurement task may be, for example, an ID of a QoE measurement task. The ID of the QoE measurement task may be used to make the terminal to stop a corresponding QoE measurement and release a corresponding QoE configuration. The activation or deactivation indication information, such as a QoE activation indication, or a QoE deactivation indication, which is configured to indicate the UE to stop the QoE measurement and release the corresponding QoE configuration.

FIG. 3 is a flowchart of a measurement method according to an embodiment of the present disclosure. The method is executed by a terminal. The measurement method in this embodiment may be applied to the terminal.

As shown in FIG. 3, the method may include, but is not limited to, the following step.

At S103, system information or a paging message sent by a network device is received, in which the system information or the paging message includes an application layer measurement configuration parameter set.

That is, the first message may be system information or a paging message, and the application layer measurement may be activated or deactivated by sending the system information or the paging message from the network device to the terminal, specifically, by sending activation or deactivation command information from the network device to the terminal via the system information or the paging message.

In embodiments of the present disclosure, the base station may activate or deactivate a QoE measurement in the terminal directly via system information or a paging message.

In embodiments of the present disclosure, the system information or the paging message may also include activation or deactivation command information, that is, the system information or the paging message includes the application layer measurement configuration parameter set and the activation or deactivation command information.

For example, the gNB sends system information or a paging message to the UE, in which the system information or the paging message includes a QoE measurement configuration parameter set. In this kind of indication mode, the activation command information may be included in the system information or the paging message, or the activation command information may be indicated in an implicit indication mode, for example, the network device sending the system information or the paging message to the terminal means to send the activation command information to the terminal, which is not limited herein.

Since a method for configuring the system information or the paging message is flexible, the system information or the paging message may be sent uniformly for a plurality of terminals, rather than being sent device by device based on the granularity of UE, which may effectively save the signaling overhead needed in the measurement indication.

In this embodiment, the system information or the paging message sent by the network device is received, in which the system information or the paging message includes the application layer measurement configuration parameter set. In this way, the application layer measurements in a plurality of UEs in the RRC_IDLE state and/or the RRC_INACTIVE state may be activated or deactivated via the system information or the paging message, which may facilitate collecting more comprehensive application layer measurement information, effectively save the signaling overhead of an air interface, enable the base station to obtain the application layer information activated by the UE in a timely manner, and facilitate the efficient statistics and management of the application layer information.

FIG. 4 is a flowchart of a measurement method according to an embodiment of the present disclosure. The method is executed by a terminal. The measurement method in this embodiment may be applied to the terminal.

As shown in FIG. 4, the method may include, but is not limited to, the following steps.

At S104, an RRC release message sent by a network device is received, in which the RRC release message includes an application layer measurement configuration parameter set.

That is, in the embodiments of the present disclosure, a measurement indication method is also provided. The base station may activate or deactivate a QoE measurement in the UE via a combination of system information, a paging message, and the RRC release message.

For example, the base station first sends a QoE measurement configuration parameter set to the UE via the RRC release message, and then activates or deactivates the QoE measurement via the system information or the paging message, which is not limited herein.

This embodiment may be applied to a terminal in a connected state, an inactive state, or an idle state, which is not limited herein.

If the terminal is in an RRC_CONNECTED state, the terminal may receive the RRC release message sent by the network device. The RRC release message includes the application layer measurement configuration parameter set. The RRC release message may also be used to trigger the terminal to switch from the RRC_CONNECTED state to an RRC_IDLE state or an RRC_INACTIVE state.

In the embodiments, information for indicating the application layer measurement configuration parameter set may be carried into the RRC release message. The terminal may be indicated to switch from the RRC_CONNECTED state to the RRC_IDLE state or the RRC_INACTIVE state and a QoE measurement configuration parameter set may be indicated by sending the RRC release message from the network device to the terminal.

For the description of the QoE measurement configuration parameter set, please refer to the above embodiments, which will not be repeated herein.

At S204, system information or a paging message or MAC CE information sent by the network device is received, in which the system information or the paging message or the MAC CE information includes activation command information.

The terminal receives the RRC release message sent by the network device. The RRC release message includes the application layer measurement configuration parameter set. Further, the terminal may receive the system information or the paging message or the MAC CE information sent by the network device. The system information or the paging message or the MAC CE information includes the activation command information.

For example, the gNB sends the system information or the paging message or the MAC CE information to the UE, in which the system information or the paging message or the MAC CE information may include the activation command information, which may include at least one of: an ID configured to identify a QoE measurement task, configured to indicate a specific QoE measurement task to be activated or deactivated; or an activation or deactivation indication, for example, may be 1bit indication information. For example, 1 means to activate and 0 means to deactivate, which is not limited herein.

That is, in the embodiments of the present disclosure, the application layer measurement is supported to be activated via the MAC CE information, or via the system information, or via the paging message, which is not limited herein.

In the measurement method provided by the embodiments of the present disclosure, if the application layer measurement is activated or deactivated via the MAC CE information, an indication for activating or deactivating based on the ID of the application layer measurement task may be expressed in bits. Each bit corresponds to the ID of an application layer measurement task, in which 1 means to activate and 0 means to deactivate, or 1 means to deactivate and 0 means to activate, which is not limited herein.

In some possible implementations of the present disclosure, the activation command information may be included in the system information or the paging message or the MAC CE information, or the activation command information may be indicated in an implicit indication mode, for example, the network device sending the system information or the paging message or the MAC CE information to the terminal means to send the activation command information to the terminal, which is not limited herein.

In this embodiment, the RRC release message sent by the network device is received, in which the RRC release message includes the application layer measurement configuration parameter set; and the system information or the paging message or the MAC CE information sent by the network device is received, in which the system information or the paging message or the MAC CE information includes the activation command information. In this way, the network device first configures the information related to the application layer measurement to the UE, and then activates the application layer measurement in a plurality of UEs in the RRC_IDLE state and/or the RRC_INACTIVE state via the system information or the paging message or the MAC CE information, which may facilitate collecting more comprehensive application layer measurement information, effectively save the signaling overhead of the air interface, enable the base station to obtain the application layer information activated by the UE in a timely manner, facilitate the efficient statistics and management of the application layer information, and effectively improve the flexibility of the measurement indication.

FIG. 5 is another flowchart of a measurement method according to an embodiment of the present disclosure. The method is executed by a terminal. The measurement method in this embodiment may be applied to the terminal.

The information related to the application layer measurement includes an application layer measurement configuration parameter set.

As shown in FIG. 5, the method may include, but is not limited to, the following steps.

At S105, application layer measurement content in the application layer measurement configuration parameter set is transmitted from an AS to an upper layer in a case that the application layer measurement configuration parameter set includes a type of service, and the terminal checks that the type of service is supported.

There are two kinds of application layer measurements. One is invisible to an RAN and may be realized via an application layer measurement container, and the other is visible to the RAN, expressed as an RAN visible application layer measurement (RAN visible QoE). The application layer measurement content may be the application layer measurement container, and/or RAN visible measurement content, which is not limited herein.

In the embodiments of the present disclosure, the UE may receive system information or a paging message, and then read the application layer measurement configuration parameter set from the system information or the paging message. If the application layer measurement configuration parameter set includes a type of service, the AS of the UE may verify whether the UE supports a QoE measurement in the type of service. If the QoE measurement in the type of service is supported, the application layer measurement content in the application layer measurement configuration parameter set may be transmitted from the AS to the upper layer to trigger the QoE measurement.

At S205, the application layer measurement configuration parameter set is discarded in a case that the application layer measurement configuration parameter set includes a type of service, and the terminal checks that the type of service is not supported.

If the application layer measurement configuration parameter set includes a type of service, the AS of the UE may verify whether the UE supports the QoE measurement in the type of service. If the terminal does not support the QoE measurement in the type of service, the received QoE measurement configuration parameter set may be discarded.

In this embodiment of the present disclosure, when the terminal receives the application layer measurement configuration parameter set for the first time, the terminal triggers to check whether the type of service is supported. Of course, the terminal may also receive a check instruction and trigger to check whether the type of service is supported in response to the check instruction, which is not limited herein.

In this embodiment, the application layer measurement content in the application layer measurement configuration parameter set is transmitted from the AS to the upper layer in a case that the application layer measurement configuration parameter set includes the type of service and the terminal checks that the type of service is supported; or the application layer measurement configuration parameter set is discarded in a case that the application layer measurement configuration parameter set includes the type of service and the terminal checks that the type of service is not supported, so that the application layer measurement may be effectively applicable to a personalized type of service, and the measurement may be performed on demand based on the type of service. Furthermore, when it is determined that the terminal checks that the type of service is not supported, the application layer measurement configuration parameter set may be discarded, which may effectively prevent the received application layer measurement configuration parameter set from occupying storage resources, and improve the practicality of the measurement method.

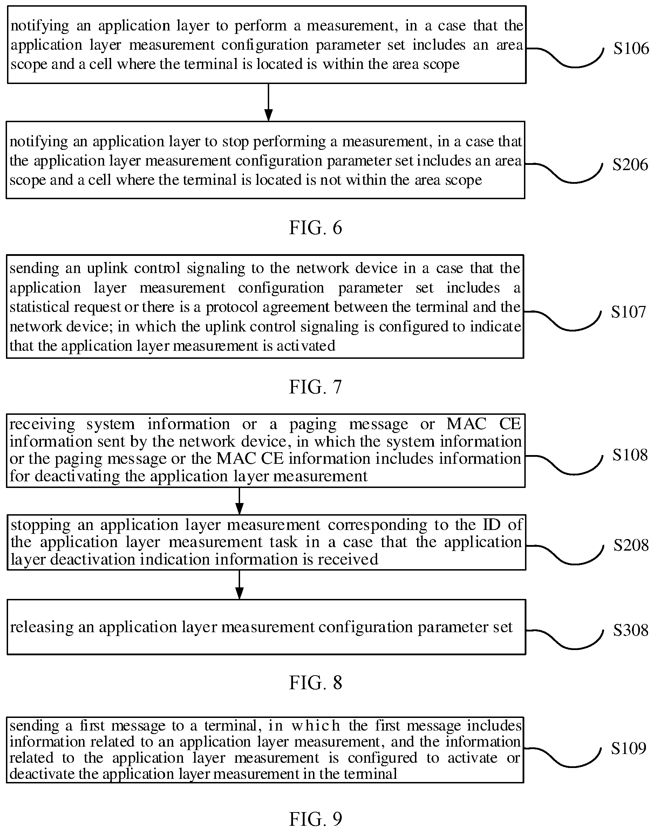

FIG. 6 is another flowchart of a measurement method according to an embodiment of the present disclosure. The method is executed by a terminal. The measurement method in this embodiment may be applied to the terminal.

The information related to the application layer measurement includes an application layer measurement configuration parameter set.

As shown in FIG. 6, the method may include, but is not limited to, the following steps.

At S106, an application layer is notified to perform a measurement in a case that the application layer measurement configuration parameter set includes an area scope, and a cell where the terminal is located is within the area scope.

The area scope, for example, may be a TA list,, a TA, an RAN or a cell list, which is used for the AS of the UE to verify whether it is in scope.

At S206, the application layer is notified to stop performing a measurement in a case that the application layer measurement configuration parameter set includes an area scope, and a cell where the terminal is located is not within the area scope.

**In** the embodiments of the present disclosure, an application layer is notified to perform a measurement in a case that the application layer measurement configuration parameter set includes the area scope, and the cell where the terminal is located is within the area scope; and the application layer is notified to stop performing a measurement in a case that the application layer measurement configuration parameter set includes the area scope, and the cell where the terminal is located is not within the area scope.

For example, if the AS of the UE has transmitted a QoE measurement container to an upper layer, the AS of the UE checks whether the cell is within the area scope. If the cell is within the area scope, the AS of the UE does not perform any operation, or the AS of the UE indicate to the upper layers that it is in scope; if the cell is not within the area range, the UE indicates to the upper layer that it is out of scope, so that the upper layer stops the corresponding QoE measurement.

In the embodiments of the present disclosure, if the application layer is notified to stop the measurement, the QoE measurement configuration may also be discarded.

In the embodiments of the present disclosure, each time the terminal moves to a new cell, the terminal usually checks whether the new cell is within the area scope, which is not limited herein.

In the embodiments of the present disclosure, whether the cell where the terminal is located is within the area scope may be first checked. If the cell is within the area scope, it is triggered to transmit the application layer measurement content to the upper layer. If the cell is not within the area scope, it is not triggered to transmit the application layer measurement content to the upper layer. Or, whether the cell is within the area scope and whether the type of service is supported may be checked simultaneously, which is no limited herein.

In this embodiment, the application layer is notified to perform the measurement in a case that the application layer measurement configuration parameter set includes the area scope and the cell where the terminal is located is within the area scope; or the application layer is notified to stop performing the measurement in a case that the application layer measurement configuration parameter set includes the area scope and the cell where the terminal is located is not within the area scope, so that the trigger occasion of the application layer measurement may be accurately determined, thereby ensuring the accuracy of the collected application layer measurement result, effectively preventing the received application layer measurement configuration parameter set from occupying storage resources, and improving the practicality of the measurement method.

In the embodiments of the present disclosure, a measurement method is also provided. A first time period lapsed after transmitting the application layer measurement content is determined in a case that the application layer measurement configuration parameter set includes a first measurement duration; and the application layer measurement is stopped and/or the application layer measurement configuration parameter set is released in a case that the first time period reaches the first measurement duration. In this way, the measurement duration of the application layer measurement may be flexibly configured, which facilitates effectively performing stopping control of the application layer measurement, prevents the application layer measurement configuration parameter set from occupying storage resources, and improves the practicality of the measurement method.

That is, in the embodiments of the present disclosure, the flexible configuration of the measurement duration is supported. A time threshold may be set for the time period lapsed after transmitting the application layer measurement content, in which the time threshold may be called as the first measurement duration, and then the time period lapsed after transmitting the application layer measurement content may be monitored, and the monitored time period may be called as the first time period. The application layer measurement is stopped and/or the application layer measurement configuration parameter set is released in a case that the first time period reaches the first measurement duration.

The UE application layer may check whether the first time period lapsed after transmitting the application layer measurement content reaches the first measurement duration. If the first time period reaches the first measurement duration, the application layer measurement is automatically stopped. Or, the AS of the UE may check whether the first time period lapsed after transmitting the application layer measurement content reaches the first measurement duration. If the first time period reaches the first measurement duration, the application layer is notified to stop the measurement. Or, the UE application layer and the AS of the UE may jointly check whether the first time period lapsed after transmitting the application layer measurement content reaches the first measurement duration, which is not limited herein.

In the embodiments of the present disclosure, a measurement method is also provided. A second time period lapsed after performing the application layer measurement is determined in a case that the application layer measurement configuration parameter set includes a second measurement duration; and the application layer measurement is stopped and/or the application layer measurement configuration parameter set is released in a case that the second time period reaches the second measurement duration. In this way, the measurement duration of the application layer measurement may be flexibly configured, which facilitates effectively performing stopping control of the application layer measurement, prevents the application layer measurement configuration parameter set from occupying storage resources, and improves the practicality of the measurement method.

That is, in the embodiments of the present disclosure, the flexible configuration of the measurement duration is supported. A time threshold may be set for the time period lapsed after triggering to perform the application layer measurement, in which the time threshold may be called as the second measurement duration, and then the time period lapsed after triggering to perform the application layer measurement may be monitored, and the monitored time period may be called as the second time period. The application layer measurement is stopped and/or the application layer measurement configuration parameter set is released in a case that the second time period reaches the second measurement duration.

The UE application layer may check whether the second time period lapsed after triggering to perform the application layer measurement reaches the second measurement duration. If the second time period reaches the second measurement duration, the application layer measurement is automatically stopped. Or, the AS of the UE may check whether the second time period lapsed after triggering to perform the application layer measurement reaches the second measurement duration. If the second time period reaches the second measurement duration, the application layer is notified to stop the measurement. Or, the UE application layer and the AS of the UE may jointly check whether the second time period lapsed after triggering to perform the application layer measurement reaches the second measurement duration, which is not limited herein.

For example, the QoE measurement configuration parameter set may include the type of service and the measurement duration (such as the first measurement duration or the second measurement duration described above). If the AS of the UE transmits the QoE measurement container to the upper layer, the UE may set a timer T as the measurement duration, and start the timer T (for example, start the timer when transmitting the QoE measurement container, or start the timer when triggering to performing the measurement). If the timer times out, the AS of the UE indicates to the upper layer to stop the measurement and to release the corresponding QoE configuration.

FIG. 7 is another flowchart of a measurement method according to an embodiment of the present disclosure. This method is executed by a terminal. The measurement method in this embodiment may be applied to the terminal.

As shown in FIG. 7, the method may include, but is not limited to, the following step.

At S107, an uplink control signaling is sent to a network device in a case that an application layer measurement configuration parameter set includes a statistical request or there is a protocol agreement between the terminal and the network device; in which the uplink control signaling is configured to indicate that an application layer measurement is activated.

Optionally, the uplink control signaling includes information indicating an ID of an application layer measurement task.

For example, if it is indicated that one measurement task is configured or all measurement tasks are configured simultaneously, the uplink control signaling may not include the ID of any application layer measurement task. If it is indicated that a plurality of measurement tasks are configured, the uplink control signaling may include the IDs of the application layer measurement tasks, which is not limited herein.

In the embodiments of the present disclosure, it is supported that the terminal reports an application layer measurement result to the network device so that the network device may collect a comprehensive application layer measurement result in a timely manner.

The statistical request is configured to indicate the UE to report to the base station whether a QoE measurement is activated, for example, the statistical request may be 1-bit information, for example, 1 means that the UE needs to report, and 0 means that the UE needs not to report, or the statistical request may be a specific RACH configuration, or an UL configuration, or an UL control signaling configuration, or the statistical request may indicate to report activation information via an RRC signaling (for example, it may be transmitted via an SDT mechanism), or the statistical request may indicate that UE may indicate to the base station that the QoE measurement is activated via the above configuration in a specific way.

If there is a protocol agreement between the terminal and the network device, the uplink control signaling may also be sent to the network device.

For example, if the AS of the UE transmits the QoE measurement container to the upper layer, in response to the statistical request being contained in the application layer measurement configuration parameter set and a protocol agreement existing between the terminal and the network device in the S107, the UE indicates to the base station that the QoE has been activated via the uplink control signaling.

For example, the uplink control signaling may be implemented via an RACH process, an UL Grant process, or an SDT process.

For example, the uplink control signaling may include the information indicating the ID of the QoE measurement task so that the base station may collect the QoE activation information.

In the embodiments of the present disclosure, a measurement method is provided. When the uplink control signaling is sent to the network device, a sending time is determined based on a randomization mode; and the uplink control signaling is sent to the network device in a case that a current time reaches the sending time, which effectively applies to the usage scenario of a plurality of terminals and avoids the network congestion caused by a large number of terminals simultaneously reporting application layer measurement results.

In the embodiments of the present disclosure, a measurement method is provided. The uplink control signaling may be sent based on a randomization mode to avoid the network congestion caused by a large number of terminals simultaneously feeding back application layer measurement information. For example, a randomization process is first performed to determine the sending time of the application layer measurement information. If the current time reaches the sending time, the uplink control signaling is sent to the network device.

As for the randomization process, for example, the UE selects a random number evenly distributed in the range from 0 to 1. If the random number falls into a pre-configured or protocol-agreed probability interval, the UE sends the uplink control signaling. Or, the UE selects a random number evenly distributed in the range from 0 to 1 as a weight of the time to send the uplink control signaling.

It should be understood that the above description is only exemplary, and the randomization process is used to discretize the occasions that a plurality of UEs send the uplink control signaling. The specific implementation is not limited to this.

In the embodiments of the present disclosure, "QMC (QoE measurement collection) measurement" or "QoE measurement" has the same meaning as "application layer measurement", both of which represent measurements performed at the application layer of the UE.

FIG. 8 is another flowchart of a measurement method according to an embodiment of the present disclosure. This method is executed by a terminal. The measurement method in this embodiment may be applied to the terminal.

As shown in FIG. 8, the method may include, but is not limited to, the following steps.

At S108, system information or a paging message or MAC CE information sent by a network device is received, in which the system information or the paging message or the MAC CE information includes information for deactivating an application layer measurement.

The system information may include the information for deactivating the application layer measurement, or the paging message may include the information for deactivating the application layer measurement, or the MAC CE information may include the information for deactivating the application layer measurement.

That is, in the embodiments of the present disclosure, deactivating the application layer measurement via the MAC CE information, or deactivating the application layer measurement via the system information, or deactivating the application layer measurement via the paging message is supported, which is not limited herein.

In the measurement method provided in the embodiments of the present disclosure, if the application layer measurement is activated or deactivated via the MAC CE information, an indication for activating or deactivating the application layer measurement task described for an ID of an application layer measurement task may be expressed in bits. Each bit corresponds to the ID of an application layer measurement task, in which 1 means to activate and 0 means to deactivate, or 1 means to deactivate and 0 means to activate, which is not limited herein.

In the embodiments of the present disclosure, the network device may also indicate the information for deactivating the application layer measurement to the terminal in order to deactivate the application layer measurement of the terminal.

In the embodiments of the present disclosure, a measurement method is also provided. The information for deactivating the application layer measurement includes at least one of: application layer deactivation indication information; or an ID of an application layer measurement task.

The application layer deactivation indication information, such as a QoE deactivation indication, is used to indicate the UE to stop a QoE measurement and release a corresponding QoE configuration. The ID of the application layer measurement task may be used to identify an ID of a QoE measurement task, so that the UE stops the corresponding QoE measurement and releases the corresponding QoE configuration based on the ID of the application layer measurement task.

At S208, an application layer measurement corresponding to the ID of the application layer measurement task is stopped in a case that the application layer deactivation indication information is received.

At S308, an application layer measurement configuration parameter set is released.

In the embodiments of the present disclosure, the terminal receives the system information or the paging message sent by the network device, in which the system information or the paging message includes the information for deactivating the application layer measurement. An application layer measurement corresponding to the ID of the application layer measurement task is stopped and the application layer measurement configuration parameter set is released in a case that the information for deactivating the application layer measurement includes the application layer deactivation indication information and the ID of the application layer measurement task.

For example, the UE receives the system information or the paging message, and, based on the information for deactivating the QoE measurement, the UE deactivates or releases the corresponding QoE measurement configuration and notifies the upper layer of the UE.

In this embodiment, the system information or the paging message or the MAC CE information sent by the network device is received, in which the system information or the paging message or the MAC CE information includes the information for deactivating the application layer measurement. The application layer measurement corresponding to the ID of the application layer measurement task is stopped and the application layer measurement configuration parameter set is released in a case that the application layer deactivation indication information is received. In this way, deactivating the application layer measurement in the UE in an RRC_IDLE state and/or an RRC_INACTIVE state via the system information or the paging message is realized, which may effectively save the signaling overhead of an air interface.

FIG. 9 is another flowchart of a measurement method according to an embodiment of the present disclosure. The method is executed by a network device.

The measurement method in the present embodiment may be applied to the network device. The network device may be an eNB, a TRP, a gNB in an NR system, a base station in other mobile communication system in the future, or an access node in a WiFi system, which is not limited herein.

As shown in FIG. 9, the method may include, but is not limited to, the following step.

At S109, a first message is sent to a terminal, in which the first message includes information related to an application layer measurement, and the information related to the application layer measurement is configured to activate or deactivate the application layer measurement in the terminal.

In some embodiments, if the network device has a measurement requirement, the information related to the application layer measurement may be included in the first message, and the first message may be sent to the terminal. The terminal receives the first message sent by the network device, and analyzes to obtain the information related to the application layer measurement from the first message. The application layer measurement is activated or deactivated based on the information related to the application layer measurement.

In this embodiment, the first message is sent to the terminal, in which the first message includes the information related to the application layer measurement, and the information related to the application layer measurement is configured to activate or deactivate the application layer measurement in the terminal, so that the application layer measurement may not be limited by a state of the terminal, which may effectively expand a scope of terminals covered by the application layer measurement, improve the comprehensiveness of the measurement, and improve the measurement effect.

In the embodiments of the present disclosure, a measurement method is provided. The first message includes at least one of: system information; a paging message; MAC CE information; or an RRC release message.

In the embodiments of the present disclosure, a measurement method is provided. The information related to the application layer measurement includes at least one of: an application layer measurement configuration parameter set; or activation or deactivation command information.

In the embodiments of the present disclosure, a measurement method is provided. The application layer measurement configuration parameter set includes: at least one application layer configuration parameter, and the application layer configuration parameter includes at least one of: an ID of an application layer measurement task; application layer measurement content; a type of service; an area scope; a measurement duration; a reporting configuration; or a statistical request, in which the statistical request is configured to indicate the terminal to report to the network device whether the application layer measurement is activated.

In the embodiments of the present disclosure, a measurement method is provided. The activation or deactivation command information includes at least one of: an ID of an application layer measurement task; activation or deactivation indication information; or a statistical request, in which the statistical request is configured to indicate the terminal to report to the network device whether the application layer measurement is activated.

For the explanation of the terms same as or corresponding to the above embodiments, please refer to the above embodiments, which will not be repeated herein.

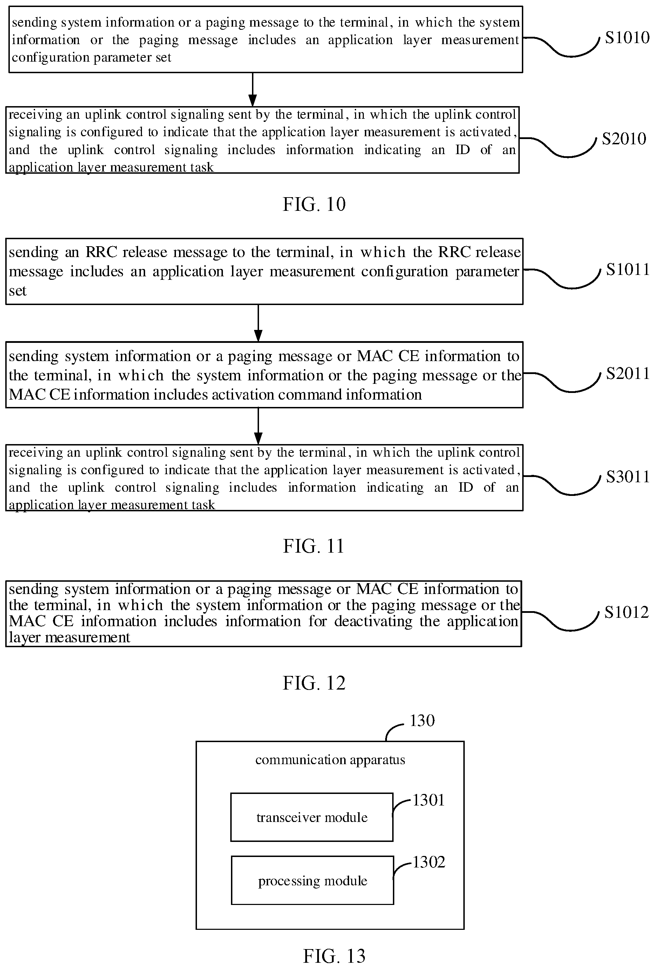

FIG. 10 is another flowchart of a measurement method according to an embodiment of the present disclosure. The method is executed by a network device.

As shown in FIG. 10, the method may include, but is not limited to, the following steps.

At S1010, system information or a paging message is sent to a terminal, in which the system information or the paging message includes an application layer measurement configuration parameter set.

In the measurement method of the present embodiment, the system information or the paging message may also include activation command information.

Example of a method for configuring the system information is given below.

The system information may be configured per cell or per area, which is not limited herein.

The paging message is configured for each terminal; or the paging message is configured for a paging group, in which the paging group includes a plurality of terminals to be paged, and the terminal is one of the terminals to be paged.

In the embodiments of the present disclosure, a measurement method is provided. The paging message includes at least one of: a paging early indication (PEI); paging downlink control information (DCI); or a paging short message.

For example, the paging message may be notified per UE (configured for each terminal), that is, by carrying the application layer measurement configuration parameter set and the activation command information in a paging record. The paging message may be notified per at least one UE group (for example, a paging group or all the UEs), that is, by carrying the application layer measurement configuration parameter set and the activation command information in the PEI, the paging DCI, or the paging short message, which is not limited herein.

In the embodiments of the present disclosure, a measurement method is provided. The PEI may carry the application layer measurement configuration parameter set or the activation command information for the terminal of a paging group.

In the embodiments of the present disclosure, a measurement method is provided. The paging DCI may carry the application layer measurement configuration parameter set or the activation command information for a terminal, or for all the UEs monitored at a paging occasion (PO).

In the embodiments of the present disclosure, a measurement method is provided. The paging DCI may indicate activation information based on a scrambling code, which is not limited herein.

In the embodiments of the present disclosure, a measurement method is provided. The paging short message may carry the application layer measurement configuration parameter set and the activation command information for all terminals. For example, different values of an indication field carried by the paging short message may be used to indicate the activation information, which is not limited herein.

At S2010, an uplink control signaling sent by the terminal is received, in which the uplink control signaling is configured to indicate that the application layer measurement is activated, and the uplink control signaling includes information indicating an ID of an application layer measurement task.

In this embodiment, the system information or the paging message is sent to the terminal, in which the system information or the paging message includes the application layer measurement configuration parameter set; and the uplink control signaling sent by the terminal is received, in which the uplink control signaling is configured to indicate that the application layer measurement is activated, and the uplink control signaling includes the information indicating the ID of the application layer measurement task. In this way, the application layer measurement in a plurality of UEs in an RRC_IDLE state and/or an RRC_INACTIVE state may be activated or deactivated via the system information or the paging message, which may facilitate collecting more comprehensive application layer measurement information, effectively save the signaling overhead of the air interface, enable the base station to obtain the application layer information activated by the UE in a timely manner, and facilitate the efficient statistics and management of the application layer information.

FIG. 11 is another flowchart of a measurement method according to an embodiment of the present disclosure. The method is executed by a network device.

As shown in FIG. 11, the method may include, but is not limited to, the following steps.

At S1011, an RRC release message is sent to a terminal, in which the RRC release message includes an application layer measurement configuration parameter set.

At S2011, system information or a paging message or MAC CE information is sent to the terminal, in which the system information or the paging message or the MAC CE information includes activation command information.

Example of a method for configuring the system information is given below.

The system information may be configured per cell (configured for each cellular cell) or per area (configured for each area), which is not limited herein.

The paging message is configured for each terminal; or the paging message is configured for a paging group, in which the paging group includes a plurality of terminals to be paged, and the terminal is one of the terminals to be paged.

The MAC CE information may also indicate the ID of a specific application layer measurement in bits, that is, in the measurement method provided by the embodiments of the present disclosure, if the application layer measurement is activated or deactivated via the MAC CE information, an indication for activating or deactivating of the application layer measurement task described for the ID of the application layer measurement task may be expressed in bits. Each bit corresponds to the ID of an application layer measurement task, in which 1 means to activate and 0 means to deactivate, or 1 means to deactivate and 0 means to activate, which is not limited herein.

In the embodiments of the present disclosure, a measurement method is provided. The paging message includes at least one of: a PEI; paging DCI; or a paging short message.

For example, a method for notifying the paging message may be per UE (configured for each terminal), that is, by carrying the activation command information in a paging record; the method for notifying the paging message may be per at least one UE group (for example, a paging group or all the UEs), that is, by carrying the activation command information in the PEI, the paging DCI, or the paging short message, which is not limited herein.

In the embodiments of the present disclosure, a measurement method is provided. The PEI may carry the activation command information for the terminal of a paging group.

In the embodiments of the present disclosure, a measurement method is provided. The paging DCI may carry the activation command information for a terminal, or for all the UEs monitored at a PO.

In the embodiments of the present disclosure, a measurement method is provided. The paging DCI may indicate the activation command information based on a scrambling code, which is not limited herein.

In the embodiments of the present disclosure, a measurement method is provided. The paging short message may carry the activation command information for all terminals. For example, different values of an indication field carried by the paging short message may be used to indicate the activation command information, which is not limited herein.

At S3011, an uplink control signaling sent by the terminal is received, in which the uplink control signaling is configured to indicate that the application layer measurement is activated, and the uplink control signaling includes information indicating an ID of an application layer measurement task.

In this embodiment, the RRC release message is sent to the terminal, in which the RRC release message includes the application layer measurement configuration parameter set; and the system information or the paging message or the MAC CE information is sent to the terminal, in which the system information or the paging message or the MAC CE information includes the activation command information; and the uplink control signaling sent by the terminal is received, in which the uplink control signaling is configured to indicate that the application layer measurement is activated, and the uplink control signaling includes the information indicating the ID of the application layer measurement task. In this way, the network device first configures information related to the application layer measurement to the UE, and then activate the application layer measurement in a plurality of UEs in an RRC_IDLE state and/or an RRC_INACTIVE state via the system information or the paging message or the MAC CE information, which may facilitate collecting more comprehensive application layer measurement information, effectively save the signaling overhead of the air interface, enable the base station to obtain the application layer information activated by the UE in a timely manner, facilitate the efficient statistics and management of the application layer information, and effectively improve the flexibility of the measurement indication.

FIG. 12 is another flowchart of a measurement method according to an embodiment of the present disclosure. The method is executed by a network device.

As shown in FIG. 12, the method may include, but is not limited to, the following step.

At S1012, system information or a paging message or MAC CE information is sent to a terminal, in which the system information or the paging message or the MAC CE information includes information for deactivating an application layer measurement.

In the embodiments of the present disclosure, the network device may also indicate the information for deactivating the application layer measurement to the terminal in order to deactivate the application layer measurement of the terminal.

In the embodiments of the present disclosure, a measurement method is also provided. The information for deactivating the application layer measurement includes at least one of: application layer deactivation indication information; or an ID of an application layer measurement task.

The application layer deactivation indication information, such as a QoE deactivation indication, is used to indicate the UE to stop a QoE measurement and release a corresponding QoE configuration. The ID of the application layer measurement task may be used to identify an ID of a QoE measurement task, so that the UE stops the corresponding QoE measurement and releases the corresponding QoE configuration based on the ID of the application layer measurement task.

In this embodiment, the system information or the paging message or the MAC CE information sent by the network device is received, in which the system information or the paging message or the MAC CE information includes the information for deactivating the application layer measurement. In this way, deactivating the application layer measurement in the UE in the RRC_IDLE state and/or the RRC_INACTIVE state via the system information or the paging message is realized, which may effectively save the signaling overhead of the air interface.

FIG. 13 is a block diagram of a communication apparatus according to an embodiment of the present disclosure. The communication apparatus 130 shown in FIG. 13 may include a transceiver module 1301 and a processing module 1302. The transceiver module 1301 may include a sending module and/or a receiving module, in which the sending module is used to achieve the sending function, and the receiving module is used to achieve the receiving function. The transceiver module 1301 may achieve the sending function and/or the receiving function.

The communication apparatus 130 may be a terminal (such as the terminal in the above method embodiments), an apparatus in the terminal, or an apparatus capable of being used in combination with the terminal. Or, the communication apparatus 130 may be a network device (such as the network device in the above method embodiments), an apparatus within a network device, or an apparatus capable of being used in combination with the network device.

The communication apparatus 130, on the side of the terminal, includes: a transceiver module 1301, configured to receive a first message sent by a network device, in which the first message includes information related to an application layer measurement, and the information related to the application layer measurement is configured to activate or deactivate the application layer measurement.

Optionally, the first message includes at least one of: system information; a paging message; MAC CE information; or an RRC release message.

Optionally, the information related to the application layer measurement includes at least one of: an application layer measurement configuration parameter set; or activation or deactivation command information.

Optionally, the application layer measurement configuration parameter set includes: at least one application layer configuration parameter, and the application layer configuration parameter includes at least one of: an ID of an application layer measurement task; application layer measurement content; a type of service; an area scope; a measurement duration; a reporting configuration; or a statistical request, in which the statistical request is configured to indicate the terminal to report to the network device whether the application layer measurement is activated.

Optionally, the activation or deactivation command information includes at least one of: an ID of an application layer measurement task; activation or deactivation indication information; or a statistical request, in which the statistical request is configured to indicate the terminal to report to the network device whether the application layer measurement is activated.

Optionally, the transceiver module 1301 is further configured to receive system information or a paging message sent by the network device, in which the system information or the paging message includes an application layer measurement configuration parameter set.

Optionally, the system information or the paging message further includes activation command information.

Optionally, the transceiver module 1301 is further configured to receive an RRC release message sent by the network device, in which the RRC release message includes an application layer measurement configuration parameter set; and receive system information or a paging message or MAC CE information sent by the network device, in which the system information or the paging message or the MAC CE information includes activation command information.

Optionally, the information related to the application layer measurement includes an application layer measurement configuration parameter set, and the transceiver module 1301 is further configured to: transmit application layer measurement content in the application layer measurement configuration parameter set from an AS to an upper layer, in a case that the application layer measurement configuration parameter set includes a type of service and the terminal checks that the type of service is supported; or discard the application layer measurement configuration parameter set, in a case that the application layer measurement configuration parameter set includes a type of service and the terminal checks that the type of service is not supported.

Optionally, the information related to the application layer measurement includes an application layer measurement configuration parameter set, and the transceiver module 1301 is further configured to: notify an application layer to perform a measurement, in a case that the application layer measurement configuration parameter set includes an area scope and a cell where the terminal is located is within the area scope; or notify an application layer to stop performing a measurement, in a case that the application layer measurement configuration parameter set includes an area scope and a cell where the terminal is located is not within the area scope.

Optionally, the communication apparatus 130 also includes: a processing module 1302, configured to determine a first time period lapsed after transmitting the application layer measurement content in a case that the application layer measurement configuration parameter set includes a first measurement duration; and stop the application layer measurement and/or release the application layer measurement configuration parameter set in a case that the first time period reaches the first measurement duration.

Optionally, the processing module 1302 is also configured to: determine a second time period lapsed after performing the application layer measurement in a case that the application layer measurement configuration parameter set includes a second measurement duration; and stop the application layer measurement and/or release the application layer measurement configuration parameter set in a case that the second time period reaches the second measurement duration.

Optionally, the transceiver module 1301 is also configured to: send an uplink control signaling to the network device in a case that the application layer measurement configuration parameter set includes a statistical request or there is a protocol agreement between the terminal and the network device; in which the uplink control signaling is configured to indicate that the application layer measurement is activated, and the uplink control signaling includes information indicating an ID of an application layer measurement task.

Optionally, the processing module 1302 is also configured to: determine a sending time based on a randomization mode.

Optionally, the transceiver module 1301 is also configured to: send the uplink control signaling to the network device in a case that a current time reaches the sending time.

Optionally, the transceiver module 1301 is also configured to: receive system information or a paging message or MAC CE information sent by the network device, in which the system information or the paging message or the MAC CE information includes information for deactivating the application layer measurement.

Optionally, the information for deactivating the application layer measurement includes at least one of: application layer deactivation indication information; or an ID of an application layer measurement task.

Optionally, the processing module 1302 is also configured to: stop an application layer measurement corresponding to the ID of the application layer measurement task in a case that the application layer deactivation indication information is received; and release an application layer measurement configuration parameter set.

Optionally, a state of the terminal is one of: an RRC connected state; an RRC idle state; or an RRC inactive state.

The communication apparatus 130, on the network device side, includes a transceiver module 1301, configured to send a first message to a terminal, in which the first message includes information related to an application layer measurement, and the information related to the application layer measurement is configured to activate or deactivate the application layer measurement in the terminal.

Optionally, the first message includes at least one of: system information; a paging message; MAC CE information; or an RRC release message.

Optionally, the information related to the application layer measurement includes at least one of: an application layer measurement configuration parameter set; or activation or deactivation command information.

Optionally, the application layer measurement configuration parameter set includes: at least one application layer configuration parameter, and the application layer configuration parameter includes at least one of: an ID of an application layer measurement task; application layer measurement content; a type of service; an area scope; a measurement duration; a reporting configuration; or a statistical request, in which the statistical request is configured to indicate the terminal to report to the network device whether the application layer measurement is activated.

Optionally, the activation or deactivation command information includes at least one of: an ID of an application layer measurement task; activation or deactivation indication information; or a statistical request, in which the statistical request is configured to indicate the terminal to report to the network device whether the application layer measurement is activated.

Optionally, the transceiver module 1301 is also configured to: send system information or a paging message to the terminal, in which the system information or the paging message includes an application layer measurement configuration parameter set and activation command information.

Optionally, the system information or the paging message further includes activation command information.

Optionally, the transceiver module 1301 is also configured to: send an RRC release message to the terminal, in which the RRC release message includes an application layer measurement configuration parameter set; and send system information or a paging message or MAC CE information to the terminal, in which the system information or the paging message or the MAC CE information includes activation command information.

Optionally, the transceiver module 1301 is also configured to: receive an uplink control signaling sent by the terminal, in which the uplink control signaling is configured to indicate that the application layer measurement is activated, and the uplink control signaling includes information indicating an ID of an application layer measurement task.

Optionally, the transceiver module 1301 is also configured to: send system information or a paging message or MAC CE information to the terminal, in which the system information or the paging message or the MAC CE information includes information for deactivating the application layer measurement.

Optionally, the information for deactivating the application layer measurement includes at least one of: application layer deactivation indication information; or an ID of an application layer measurement task.

Optionally, the paging message is configured for each terminal; or the paging message is configured for a paging group, in which the paging group includes a plurality of terminals to be paged, and the terminal is one of the terminals to be paged.

Optionally, the paging message includes at least one of: a PEI; paging DCI; or a paging short message.

Optionally, a state of the terminal is one of: an RRC connected state; an RRC idle state; or an RRC inactive state.

In this embodiment, the first message sent by the network device is received, in which the first message includes the information related to an application layer measurement, and the information related to the application layer measurement is configured to activate or deactivate the application layer measurement, so that the application layer measurement may not be limited by the state of the terminal, which may effectively expand a scope of terminals covered by the application layer measurement, improve the comprehensiveness of the measurement, and improve the measurement effect.

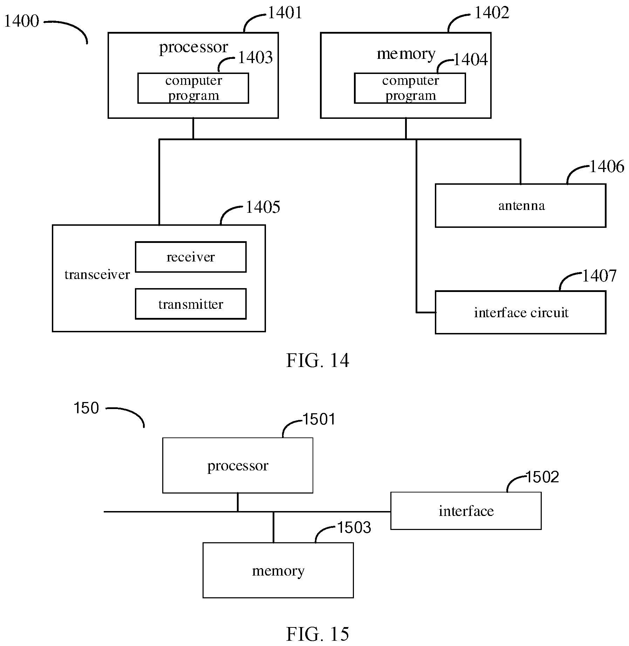

FIG. 14 is another block diagram of a communication apparatus according to an embodiment of the present disclosure. The communication apparatus 140 may be a terminal (such as the terminal in the above method embodiments), a network device (such as the network device in the above method embodiments), a chip, a chip system, a processor, etc. that supports the network device to implement the method, or a chip, a chip system, a processor, etc. that supports the terminal to implement the method. The apparatus may be used to implement the method in the above method embodiments. For details, please refer to the above method embodiments.

The communication apparatus 140 may include one or more processors 1401. The processor 1401 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 140 may also include one or more memories 1402 for storing the computer program 1404. The computer program 1403 may be stored in the processor 1401, and the processor 1401 executes the computer program 1404 and/or the computer program 1403, which may cause the communication apparatus 140 to implement the method in the above method embodiments. Optionally, the memory 1402 may also store data. The communication apparatus 140 and the memory 1402 may be set up separately or integrated together.

Optionally, the communication apparatus 140 may also include a transceiver 1405 and an antenna 1406. The transceiver 1405 may be called a transceiver unit, a transceiver machine, or a transceiver circuit, etc., to implement the receiving and sending function. The transceiver 1405 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 140 may also include one or more interface circuits 1407. The interface circuit 1407 is used to receive code instructions and transmit the code instructions to the processor 1401. The processor 1401 runs the code instructions to cause the communication apparatus 140 to implement the method in the above method embodiments.

In one implementation, the processor 1401 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 1401 may store a computer program 1403. When the computer program 1403 is running on the processor 1401, the communication apparatus 140 is caused to implement the method in the above method embodiments. The computer program 1403 may be solidified in the processor 1401, in which case the processor 1401 may be implemented in hardware.

In an implementation, the communication apparatus 140 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal (such as the terminal in the method embodiments), but the scope of the communication apparatus in the disclosure is not limited to this, and the structure of the communication apparatus may not be restricted by FIG. 14. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the structural diagram of a chip in FIG. 15. The chip shown in FIG. 15 includes a processor 1501 and an interface 1503. There may be one or more processors 1501, and there may be one or more interfaces 1503.

For the situation that the chip is used to perform the functions of the terminal in the embodiments of the present disclosure: the interface 1502 is used to implement the S102 in the FIG. 2, or the S103 in the FIG. 3, or the S104 and the S204 in the FIG. 4, etc.

For the situation that the chip is used to perform the functions of the network device in the embodiments of the present disclosure: the interface 1502 is used to implement the S109 in the FIG. 9, or the S1010 in the FIG. 10, etc.

Optionally, the chip also includes a memory 1503, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a communication system is provided. The communication system includes the communication apparatus in the FIG. 13 as a terminal (such as the terminal in the above method embodiments) and the communication apparatus in the FIG. 13 as a network device (such as the network device in the above method embodiments), or, the communication system includes the communication apparatus in the FIG. 14 as a network device (such as the network device in the above method embodiments) and the communication apparatus in the FIG. 14 as a terminal (such as the terminal in the above method embodiments).

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A measurement method, performed by a terminal, comprising:
receiving a first message sent by a network device, wherein the first message comprises information related to an application layer measurement, and the information related to the application layer measurement is configured to activate or deactivate the application layer measurement.

2. The method of claim 1, wherein the first message comprises at least one of:
system information;
a paging message;
medium access control control element (MAC CE) information; or
a radio resource control (RRC) release message.

3. The method of claim 1, wherein the information related to the application layer measurement comprises at least one of:
an application layer measurement configuration parameter set; or
activation or deactivation command information.

4. The method of claim 3, wherein the application layer measurement configuration parameter set comprises: at least one application layer configuration parameter, and the application layer configuration parameter comprises at least one of:
an identity (ID) of an application layer measurement task;
application layer measurement content;
a type of service;
an area scope;
a measurement duration;
a reporting configuration; or
a statistical request, wherein the statistical request indicates the terminal to report to the network device whether the application layer measurement is activated.

5. The method of claim 3, wherein the activation or deactivation command information comprises at least one of:
an ID of an application layer measurement task;
activation or deactivation indication information; or
a statistical request, wherein the statistical request is configured to indicate the terminal to report to the network device whether the application layer measurement is activated.

6. The method of claim 1, wherein receiving the first message sent by the network device, wherein the first message comprises the information related to the application layer measurement, comprises:
receiving system information or a paging message sent by the network device, wherein the system information or the paging message comprises an application layer measurement configuration parameter set.

7. The method of claim 6, wherein the system information or the paging message further comprises activation command information.

8. The method of claim 1, wherein receiving the first message sent by the network device, wherein the first message comprises the information related to the application layer measurement, comprises:
receiving an RRC release message sent by the network device, wherein the RRC release message comprises an application layer measurement configuration parameter set; and
receiving system information or a paging message or MAC CE information sent by the network device, wherein the system information or the paging message or the MAC CE information comprises activation command information.

9. The method of claim 1, wherein the information related to the application layer measurement comprises an application layer measurement configuration parameter set, and the method further comprises at least one of:
transmitting application layer measurement content in the application layer measurement configuration parameter set from an access stratum (AS) to an upper layer, in a case that the application layer measurement configuration parameter set comprises a type of service and the terminal checks that the type of service is supported; or
discarding the application layer measurement configuration parameter set, in a case that the application layer measurement configuration parameter set comprises a type of service and the terminal checks that the type of service is not supported.

10. The method of claim 1, wherein the information related to the application layer measurement comprises an application layer measurement configuration parameter set, and the method further comprises at least one of:
notifying an application layer to perform a measurement, in a case that the application layer measurement configuration parameter set comprises an area scope and a cell where the terminal is located is within the area scope; or
notifying an application layer to stop performing a measurement, in a case that the application layer measurement configuration parameter set comprises an area scope and a cell where the terminal is located is not within the area scope.

11. The method of claim 9, further comprising:
determining a first time period lapsed after transmitting the application layer measurement content in a case that the application layer measurement configuration parameter set comprises a first measurement duration; and
stopping the application layer measurement and/or releasing the application layer measurement configuration parameter set in a case that the first time period reaches the first measurement duration.

12. The method of claim 9, further comprising:
determining a second time period lapsed after performing the application layer measurement in a case that the application layer measurement configuration parameter set comprises a second measurement duration; and
stopping the application layer measurement and/or releasing the application layer measurement configuration parameter set in a case that the second time period reaches the second measurement duration.

13. The method of claim 9, further comprising:
sending an uplink control signaling to the network device in a case that the application layer measurement configuration parameter set comprises a statistical request or there is a protocol agreement between the terminal and the network device;
wherein the uplink control signaling is configured to indicate that the application layer measurement is activated, and the uplink control signaling comprises information indicating an ID of an application layer measurement task.

14. The method of claim 13, wherein sending the uplink control signaling to the network device comprises:
determining a sending time based on a randomization mode; and
sending the uplink control signaling to the network device in a case that a current time reaches the sending time.

15. The method of claim 1, wherein receiving the first message sent by the network device, wherein the first message comprises the information related to the application layer measurement, comprises:
receiving system information or a paging message or MAC CE information sent by the network device, wherein the system information or the paging message or the MAC CE information comprises information for deactivating the application layer measurement.

16. The method of claim 15, wherein the information for deactivating the application layer measurement comprises at least one of:
application layer deactivation indication information; or
an ID of an application layer measurement task.

17. The method of claim 16, further comprising:
stopping an application layer measurement corresponding to the ID of the application layer measurement task in a case that the application layer deactivation indication information is received; and
releasing an application layer measurement configuration parameter set.

18. The method of any one of claims 1 to 17, wherein a state of the terminal is one of:
an RRC connected state;
an RRC idle state;
or an RRC inactive state.

19. A measurement method, performed by a network device, comprising:
sending a first message to a terminal, wherein the first message comprises information related to an application layer measurement, and the information related to the application layer measurement is configured to activate or deactivate the application layer measurement in the terminal.

20. The method of claim 19, wherein the first message comprises at least one of:
system information;
a paging message;
medium access control control element (MAC CE) information; or
a radio resource control (RRC) release message.

21. The method of claim 19, wherein the information related to the application layer measurement comprises at least one of:
an application layer measurement configuration parameter set; or
activation or deactivation command information.

22. The method of claim 21, wherein the application layer measurement configuration parameter set comprises: at least one application layer configuration parameter, and the application layer configuration parameter comprises at least one of:
an identity (ID) of an application layer measurement task;
application layer measurement content;
a type of service; an area scope;
a measurement duration; a reporting configuration; or
a statistical request, wherein the statistical request indicates the terminal to report to the network device whether the application layer measurement is activated.

23. The method of claim 21, wherein the activation or deactivation command information comprises at least one of:
an ID of an application layer measurement task;
activation or deactivation indication information; or
a statistical request, wherein the statistical request is configured to indicate the terminal to report to the network device whether the application layer measurement is activated.

24. The method of claim 19, wherein sending the first message to the terminal, wherein the first message comprises the information related to the application layer measurement, comprises:
sending system information or a paging message to the terminal, wherein the system information or the paging message comprises an application layer measurement configuration parameter set.

25. The method of claim 24, wherein the system information or the paging message further comprises activation command information.

26. The method of claim 19, wherein sending the first message to the terminal, wherein the first message comprises the information related to the application layer measurement, comprises:
sending an RRC release message to the terminal, wherein the RRC release message comprises an application layer measurement configuration parameter set; and
sending system information or a paging message or MAC CE information to the terminal, wherein the system information or the paging message or the MAC CE information comprises activation command information.

27. The method of claim 19, further comprising:
receiving an uplink control signaling sent by the terminal, wherein the uplink control signaling indicates that the application layer measurement is activated, and the uplink control signaling comprises information indicating an ID of an application layer measurement task.

28. The method of claim 19, wherein sending the first message to the terminal, wherein the first message comprises the information related to the application layer measurement, comprises:
sending system information or a paging message or MAC CE information to the terminal, wherein the system information or the paging message or the MAC CE information comprises information for deactivating the application layer measurement.

29. The method of claim 28, wherein the information for deactivating the application layer measurement comprises at least one of:
application layer deactivation indication information; or
an ID of an application layer measurement task.

30. The method of claim 20 or claim 24 or claim 26 or claim 28, wherein
the paging message is configured for each terminal; or
the paging message is configured for a paging group, wherein the paging group comprises a plurality of terminals to be paged, and the terminal is one of the terminals to be paged.

31. The method of claim 30, wherein the paging message comprises at least one of:
a paging early indication (PEI);
paging downlink control information (DCI); or
a paging short message.

32. The method of claims 19 to 31, wherein a state of the terminal is one of:
an RRC connected state;
an RRC idle state; or
an RRC inactive state.

33. A communication apparatus, comprising:
a transceiver module, configured to receive a first message sent by a network device, wherein the first message comprises information related to an application layer measurement, and the information related to the application layer measurement is configured to activate or deactivate the application layer measurement.

34. A communication apparatus, comprising:
a transceiver module, configured to send a first message to a terminal, wherein the first message comprises information related to an application layer measurement, and the information related to the application layer measurement is configured to activate or deactivate the application layer measurement in the terminal.

35. A communication apparatus, comprising a processor and a memory for storing a computer program, wherein when the computer program stored in the memory is executed by the processor, the apparatus is caused to perform:
the method of any one of claims 1 to 18.

36. A communication apparatus, comprising a processor and a memory for storing a computer program, wherein when the computer program stored in the memory is executed by the processor, the apparatus is caused to implement the method of any one of claims 19 to 32.

37. A computer-readable storage medium for storing instructions, wherein when the instructions are executed, the method of any one of claims 1 to 18 is implemented.

38. A computer-readable storage medium for storing instructions, wherein when the instructions are executed, the method of any one of claims 19 to 32 is implemented.
